# EUROPÄISCHE PATENTSCHRIFT

(11) **EP 2 134 627 B1**
(45) Veröffentlichungstag und Bekanntmachung des Hinweises auf die Patenterteilung: **29.12.2010**
(21) Anmeldenummer: 08716266.5
(22) Anmeldetag: 05.03.2008
(51) Int. Cl.: B65G 1/137

(54) **DOPPELSEITIG ZUGÄNGLICHES KOMMISSIONIERREGAL UND KOMMISSIONIERVERFAHREN**
PICKING RACK ACCESSIBLE FROM TWO SIDES AND PICKING METHOD
RAYON DE COMMISSIONNEMENT À ACCÈS BILATÉRAL ET PROCÉDÉ DE COMMISSIONNEMENT

(30) Priorität: 05.03.2007 DE 102007011856
(43) Veröffentlichungstag der Anmeldung: 23.12.2009
(73) Patentinhaber: SSI Schäfer Noell GmbH Lager-und Systemtechnik, 97232 Giebelstadt (DE)
(72) Erfinder: SCHAEFER, Gerhard, 57290 Neunkirchen (DE)
(74) Vertreter: Wegener, Markus
(86) Internationale Anmeldenummer: PCT/EP2008/001749
(87) Internationale Veröffentlichungsnummer: WO 2008/107175

(56) Entgegenhaltungen:
- EP-A- 0 860 382
- EP-A- 0 990 171
- DE-A1- 4 131 567
- US-A- 4 814 742
- US-A- 5 733 098
- US-A- 5 781 443

## Beschreibung

Die vorliegende Erfindung betrifft ein Lagerregal zur Verwendung in einer Kommissionieranlage, mit einer Vielzahl von übereinander angeordneten Regalebenen, die jeweils eine Vielzahl von nebeneinander angeordneten Regalfächern umfasst.

Die vorliegende Erfindung betrifft ferner eine Kommissionieranlage mit einem Artikellager, zumindest einem erfindungsgemäßen Lagerregal und mit einer Fördertechnik.

Außerdem betrifft die vorliegende Erfindung ein Verfahren zum Kommissionieren von Artikeln, wobei Artikel gemäß einem Kommissionierauftrag manuell kommissioniert werden und das erfindungsgemäße Lagerregal eingesetzt wird.

Solche Vorrichtungen und Verfahren sind im Stand der Technik allgemein bekannt.

Es sind verschiedene Kommissionierverfahren bekannt. Insbesondere ist eine einstufige Kommissionierung und eine zweistufige Kommissionierung bekannt.

Bei einer einstufigen Kommissionierung wird ein Kundenauftrag (Kommissionierauftrag) anhand einer Kommissionierliste von einer Kommissionierperson in einem Rundgang durch ein Artikellager "einstufig" zusammengestellt. Diese Art des Kommissionierens wird auch "Ein Mann, ein Auftrag!" genannt bzw. als "Mann-zur-Ware-Prinzip" bezeichnet. Ein Kommissionierauftrag besteht aus mehreren Auftragszeilen, wobei jede Auftragszeile wiederum angibt, wieviel Artikel eines bestimmten Artikeltyps vom Kunden benötigt werden und somit zusammengestellt (kommissioniert) werden müssen. In einem exemplarischen Behälterlager (Artikellager) werden die Artikel in Lagerbehältern bevorratet. Der Kommissionierer läuft durch das Lager und entnimmt entsprechend den Auftragszeilen seines Kommissionierauftrags Artikel vorbestimmter Anzahl aus den Lagerbehältern und gibt diese in einen Auftragsbehälter, den der Kommissionierer mit sich führt und mit dem der Kommissionierauftrag "verheiratet" (d.h. dem er zugeordnet) ist.

Bei einer zweistufigen Kommissionierung, die auch "Batch-Kommissionierung" genannt wird, wird eine Gruppe von Kundenaufträgen (eine "Batch") dahingehend zusammengefasst, dass in einer ersten Stufe Artikel einer geforderten Gesamtmenge entnommen (artikelweise Kommissionierung) werden und in einer zweiten Stufe die Artikel auf Aufträge (z.B. Auftragsbehälter) verteilt werden (auftragsweise Sortierung). Eine Sortierung, und somit eine zweite Kommissionierstufe, wird zumeist über einen automatischen Sorter realisiert.

Eine Batch ist also eine Zusammenfassung von mehreren Kommissionieraufträgen.

Das Dokument DE 10 2004 058 216 A1 mit dem Titel "Kommissionieranordnung für eine Apotheke" zeigt eine Kommissionieranlage mit wenigstens einem Regal mit einer Vielzahl von Regalfächern, welche jeweils ausgebildet sind, einen Artikel, insbesondere ein Medikament, aufzunehmen, wenigstens einer beweglichen Transportvorrichtung, welche mit einer Positioniervorrichtung verbunden und ausgebildet ist, einen Artikel aufzunehmen und in ein Regalfach hineinzubewegen, und die Positioniervorrichtung ausgebildet ist, die Transportvorrichtung im Bereich eines Regalfachs zu positionieren, wobei die Regalfächer jeweils eine erste Regalfachöffnung und eine zweite Regalfachöffnung zum Einfügen, Ausführen und/oder Durchführen eines Artikels aufweisen und die Positioniervorrichtung ausgebildet ist, die Transportvorrichtung in einem Bereich vor eine Regalfachöffnung zu bewegen, und die Transportvorrichtung ausgebildet ist, den Artikel in das Regalfach hinein, aus dem Regalfach heraus und/oder durch das Regalfach hindurchzubewegen.

Das Dokument US 4,814,742 mit dem Titel "INQUIRY SYSTEM FOR DETECTING A SELECTED OBJECT" beschreibt ein Abfragesystem zum Erfassen des Orts eines ausgewählten Gegenstands. Das System weist eine Antworteinrichtung auf, die eine eigene identifizierende Adresse hat und die auf einen Erfassungsbefehl antwortet. Die Antworteinrichtung ist auf jedem auszuwählenden Gegenstand vorgesehen. Der Erfassungsbefehl wird von einer Steuereinrichtung gesendet, die mit der Antworteinrichtung durch die Verwendung einer Adresse in Verbindung steht bzw. kommuniziert.

Das Dokument US 5,781,443 mit dem Titel "APPARATUS FOR USE IN PARTS ASSEMBLY" offenbart ein Lagerregal, welches in Produktionsstätten eingesetzt wird, an denen aus mehreren Komponenten bestehende Produkte baukastenartig zusammengebaut werden. Ein klassisches Beispiel der Verwendung stellt eine Montagelinie in der Automobilindustrie dar. Auf einem zentral angeordneten Montageband wird die Karosserie eines zusammenzubauenden Fahrzeugs geführt. Seitlich zum Band können links und/oder rechts Lagerregale vorgesehen sein, die in übereinander angeordneten Ebenen eine Vielzahl von nebeneinander angeordneten Lagerbehältern aufweisen. Oberhalb jeder Ebene, d.h. am unteren Rand der nächst höhergelegenen Ebene, ist eine Leiste vorgesehen, die eine Vielzahl von Anzeigeelementen sowie Sender-Empfänger-Paare aufweist. Die Leiste ist dem Montageband zugewandt. Die Sender-Empfänger-Paare werden in der Ebene der Regalfront betrieben. Die Sender-Empfänger-Paare sind so ausgebildet, dass der Sender permanent Strahlen aussendet, so dass sich vor der Öffnung eines Lagerbehälters ein Strahlenfeld ausbildet. Sobald ein Arbeiter mit seiner Hand in einen der Lagerbehälter greift, um eine Komponente zu entnehmen, werden die Strahlen von der Hand in Richtung der Empfänger zurückreflektiert. Vorzugsweise ist ein Schwellenwert des Empfängers so eingestellt, dass lediglich ein Signal ausgegeben wird, wenn tatsächlich in den Behälter gegriffen wird. Der Empfänger gibt kein Signal aus, wenn Strahlung entweder durch den Behälter selbst oder eine nächste darunter angeordnete Leiste reflektiert wird. Die oben erwähnte Anzeige wird verwendet, um den Arbeiter zu dem richtigen Lagerbehälter zu führen und um ihm eine Anzahl von zu entnehmenden Komponenten anzuzeigen. Mit dem System der US 5,781,443 ist es somit möglich, einen Arbeiter per Anzeige zu führen, was auch als "Pick-by-Light" bezeichnet wird, und gleichzeitig eine Entnahme zu kontrollieren bzw. zu bestätigen.

Die deutsche Patentanmeldung DE 41 31 567 A1 betrifft ein Kommissionierleitsystem. Das Kommissionierleitsystem der DE 41 31 567 A1 umfasst zwei Lagerregale, zwischen denen mittig eine Fördereinrichtung, wie zum Beispiel ein Gurtförderer, angeordnet ist. Der Gurtförderer ist entlang seiner Längsrichtung in mehrere Abschnitte unterteilt. Die seitlich dazu angeordneten Regale sind in entsprechende Längsabschnitte unterteilt. Jeweils ein Abschnitt des Gurtförderers ist einem entsprechenden Abschnitt des Regals zugeordnet. Zugeordnete Abschnitte liegen sich also in Querrichtung gegenüber. Über den Gurtförderer werden Auftragsbehälter zum Arbeitsplatz befördert. Im Regal werden Lagerbehälter gelagert. Zum Zwecke einer Kommissionierung von Artikeln werden Artikel aus den Lagerbehältern entnommen und in entsprechende Auftragsbehälter gelegt. Die Zuordnung erfolgt gemäß sogenannten Kommissionieraufträgen. Ein Kommissionierauftrag kann aus mehreren Auftragszeilen bestehen. Jeder Auftragsteil kann aus einem oder mehreren Artikeln bestehen.

Das Regal der DE 41 31 567 A1 ist ebenfalls in Ebenen unterteilt. Jeder Ebene ist eine Kommissionierleiste zugeordnet. Jede Kommissionierleiste weist je nach Anzahl der oberhalb zur Kommissionierleiste angeordneten Lagerbehälter eine entsprechende Anzahl von Anzeigeelementen auf. Die Anzeigeelemente werden verwendet, um eine Kommissionierperson zu führen ("Pick-by-Light"). Mittels der Anzeige bekommt der Kommissionierer angezeigt, aus welchem Fach bzw. Lagerbehälter welche Anzahl von Artikeln zu greifen ist, um sie in den per Kommissionierauftrag zugeordneten Auftragsbehälter zu legen. Vorzugsweise ist auch eine Quittiertaste vorgesehen, so dass ein abgeschlossener Kommissioniervorgang bestätigt werden kann. Somit kann mit dem Kommissionierleitsystem der DE 41 31 567 "beleglos", das heißt ohne Handzettel, kommissioniert werden.

Ferner sind sogenannte automatisierte Kleinteillager (AKL) bekannt. Dort stehen sich üblicherweise zwei Regale gegenüber, die zwischen sich eine Regalgasse definieren, in der ein Regalbediengerät verfahrbar ist, um Artikel aus den Regalzeilen abzuholen, die wiederum in Ladehilfsmitteln, wie zum Beispiel Lagerbehältern oder auf Tablaren, gelagert sind. Das Regalbediengerät holt ein Ladehilfsmittel, welches zur Abarbeitung eines Kommissionierauftrags benötigt wird, aus der Regalzeile ab und gibt es an einem stirnseitigen Ende wieder an ein anderes Regalfach ab. Auf einer dem Regalbediengerät gegenüberliegenden Seite des Regals, das heißt der Rückseite des Regals, kann ein weiteres Regalbediengerät den endgültigen Transport des Regalbediengeräts aus dem AKL zu einem Kommissionierarbeitsplatz übernehmen. Die hier beschriebene Art der Kommissionierung stellt eine zweistufige Kommissionierung dar.

Ein Nachteil einer zweistufigen Kommissionierung ist jedoch der große Aufwand, der vorab betrieben werden muss, um entsprechende Batches zu bilden und die Lagermaschinen (Regalbediengeräte) und Sortiereinrichtungen entsprechend anzusteuern, so dass ein für eine Abarbeitung eines Kommissionierauftrags erforderliches Ladehilfsmittel zur rechten Zeit am richtigen Ort ist.

Diese Problematik verschlimmert sich zusätzlich, wenn anstatt automatisierter Lagermaschinen Menschen zum Kommissionieren eingesetzt werden. Ein Mensch entzieht sich der absoluten Kontrolle des übergeordneten Lagerverwaltungsrechners, der üblicherweise die Lagermaschinen steuert.

Es ist deshalb eine Aufgabe der vorliegenden Erfindung, ein Lagerregal bereitzustellen, welches bei einer zweistufigen Kommissionierung als Zwischenlager dient und insbesondere eine manuelle Kommissionierung zulässt. Insbesondere soll der mit einer zweistufigen Kommissionierung verbundene Planungsaufwand reduziert werden.

Diese Aufgabe wird mittels eines Lagerregals zur Verwendung in einer Kommissionieranlage nach Anspruch 1 gelöst.

Ferner wird die Aufgabe durch eine Kommissionieranlage mit einem Artikelregal, einem erfindungsgemäßen Lagerregal und einer Fördertechnik gelöst.

Außerdem wird die Erfindung mit einem Verfahren zum Kommissionieren von Artikeln gelöst, wobei die Artikel gemäß einem Kommissionierauftrag manuell kommissioniert werden, wobei ein Lagerregal eingesetzt wird, welches eine Vielzahl von Regalfächern aufweist, wobei jedem Regalfach eine Bedieneinheit, die einen Sender, einen Empfänger und eine Anzeige aufweist, zugeordnet ist, wobei das Verfahren die folgenden Schritte aufweist: Befüllen eines oder mehrerer Regalfächer mit einem oder mehreren Artikeln eines oder mehrerer Artikeltypen von einer Befüllseite des Lagerregals her, wobei das Befüllen mittels der Bedieneinheit registriert wird; Betätigen einer Anzeige eines Regalfachs, welches zuvor befüllt wurde und in welchem Artikel lagern, die zur Abarbeitung des Kommissionierauftrags benötigt werden; und von einer Entnahmeseite aus, die von der Befüllseite verschieden ist, Entnahme der zur Abarbeitung benötigten Artikel aus dem befüllten Regalfach, welches der betätigten Anzeige zugeordnet ist.

Das Lagerregal der Erfindung hat die Funktion eines Zwischenlagers. Es ist von zwei Seiten zugänglich, wobei die Regalfächer vorzugsweise Durchgriffsfächer sind. Bei einer zweistufigen Kommissionierung werden, wie oben erwähnt, mehrere Kommissionieraufträge zu einer Batch zusammengefasst. Verschiedene zu einer Batch gehörende Artikel, die vorzugsweise in Lagerbehältern gelagert sind, werden aus dem Artikellager ausgelagert und müssen anschließend an einen Zwischenlagerplatz verbracht werden, um endgültig kommissioniert zu werden. Gemäß der vorliegenden Erfindung kann ein Regalfach dabei frei ausgewählt werden, in welches die Artikel gelegt werden, wenn sie aus dem Lagerbehälter entnommen werden. Die auf der Befüllseite des Lagerregals vorgesehene Bedieneinheit registriert den Ort (Regalfach) und vorzugsweise die Anzahl der Artikel. Somit ist es möglich, dass vorzugsweise Regalfächer belegt werden, die auf der gegenüberliegenden Entnahmeseite schnell und einfach erreichbar sind (kurze Wege). Kurze Wege sind auch ergonomisch günstig. Sobald ein Regalfach von der Entnahmeseite her geleert wurde, kann es von der Befüllseite her erneut gefüllt werden.

Dies ist insbesondere von Vorteil, wenn Menschen zum Befüllen und Leeren (Kommissionieren) eingesetzt werden. Der Mensch kann selbständig entscheiden, in welches der Regalfächer er nachzufüllende Artikel gibt. Diese Wahl wird natürlich so ausfallen, dass der Mensch möglichst wenig laufen muss. Dadurch reduzieren sich die Wege, und somit die Zeit, die erforderlich ist, um das Regal zu befüllen. Dies gilt jedoch nicht nur für Menschen, sondern auch beim Einsatz von Lagermaschinen.

Lagerbehälter können vollständig aufgelöst werden. Sie müssen nicht mehr in das Artikellager zurückverbracht werden. Dies reduziert die Anzahl der Lagerspiele bei gleichbleibender Leistung.

Das erfindungsgemäße (Zwischen-)Lagerregal ist somit hochdynamisch und flexibel. Es muss nicht vorab geplant werden, in welches Regalfach welcher Artikel gelegt wird. Dadurch reduziert sich der Planungsaufwand auf Seiten des Lagerverwaltungssystems.

Gemäß einer bevorzugten Ausführungsform ist jedem Regalfach jeweils eine eigene Bedieneinheit zugeordnet.

Somit erfolgt eine 1:1-Zuordnung zwischen Regalfach und Bedieneinheit. Es kann gewährleistet werden, dass es zu keinen Fehlzuordnungen zwischen Artikel und entsprechendem Regalfach kommt.

Jedem Regalfach soll auf der Entnahmeseite zusätzlich zumindest eine Anzeige, und vorzugsweise auch ein Sender und ein Empfänger, zugeordnet sein.

In diesem Fall kann sowohl auf der Befüllseite als auch auf der Entnahmeseite jederzeit überprüft werden, auf welches Regalfach zugegriffen wird bzw. auf welches Regalfach zuzugreifen ist. Mittels der Sender und Empfänger kann eine Bestätigung automatisiert erfolgen. Die Anzeige wird eingesetzt, um insbesondere dem Kommissionierer anzuzeigen, wieviele Artikel er welchem Regalfach auf der Entnahmeseite entnehmen muss. Somit wird sowohl der Vorgang des Befüllens als auch der Vorgang des Leerens des (Zwischen-)Lagerregals registriert, überprüft und ggf. korrigiert.

Gemäß einer weiteren Ausführungsform weist die Bedieneinheit ferner ein Eingabeelement auf, um eine Anzahl von aus einem Regalfach entnommenen Artikeln oder eine Anzahl von an ein Regalfach abgegebenen Artikeln eingeben zu können.

Eingabeelemente sind insbesondere auf der Seite von Vorteil, von der das Lagerregal befüllt wird. Insbesondere wenn Lagerbehälter vollständig aufgelöst werden sollen, kann in einem ersten Schritt die tatsächlich an ein Regalfach abgegebene Anzahl von Artikeln eingegeben werden und in einem zweiten Schritt können die restlichen Artikel in ein anderes Regalfach unter gleichzeitiger Angabe der Anzahl abgegeben bzw. eingegeben werden.

Außerdem ist es von Vorteil, wenn die Bedieneinheit in Form einer Leiste realisiert ist, die oberhalb und/oder unterhalb einer Regalebene angeordnet ist.

Eine räumliche Zuordnung zwischen Bedieneinheit und Regalfach ist somit auf einfache Weise gegeben. Diese Zuordnung lässt sich auch optisch insbesondere von Menschen einfach erkennen.

Gemäß einer bevorzugten Ausführungsform definiert der Sender ein Strahlfeld, um eine Öffnung eines Regalfach abzudecken, und der Empfänger ist angepasst, um reflektierende Strahlen des Senders zu empfangen, wenn die Öffnung von einem Gegenstand, vorzugsweise einer Hand einer Bedienperson, durchquert wird.

Auf diese Weise lässt sich zum Beispiel ein Lichtgitter realisieren, welches Signale liefern kann, um eine Aktion bei einem bestimmten Regalfach erfassen und überprüfen zu können. Dabei wird das erfasste Signal vorzugsweise an ein übergeordnetes Lagerverwaltungssystem zur weiteren Verarbeitung geliefert.

Gemäß einer weiteren besonderen Ausgestaltung ist das Anzeigeelement ein LED-Anzeigenfeld oder eine einzelne Leuchtdiode.

Mittels eines LED-Anzeigenfelds kann die Anzahl von zu entnehmenden Artikeln einfach visuell dargestellt werden. Eine einzelne Leuchtdiode kann verwendet werden, wenn lediglich ein Regalfach zu kennzeichnen ist und es auf die Anzahl der in das Regalfach zu gebenden oder von dort zu entnehmenden Artikel nicht ankommt.

Weiterhin ist es bevorzugt, wenn die Bedieneinheit eine Quittiertaste umfasst.

Mittels der Quittiertaste kann eine Aktion zusätzlich (manuell) bestätigt werden. Dies stellt eine weitere Sicherheitsstufe beim Kommissionieren dar.

Gemäß einer bevorzugten Ausführungsform der Kommissionieranlage, wobei zu kommissionierende Artikel über die Fördertechnik abtransportierbar sind, wobei die Fördertechnik vorzugsweise einen oder mehrere Kommissionierbahnhöfe umfasst, die bei der Entnahmeseite jeweils einem vorbestimmten Abschnitt des Lagerregals zugeordnet sind, der von einem Putter (Bedienperon) bedienbar ist, und wobei das Lagerregal auf der Befüllseite in einer Vielzahl weiterer Abschnitte unterteilt ist, die einem oder mehreren Abschnitten auf der Entnahmeseite zugeordnet sind und die von einem Picker (Bedienperson) bedienbar sind.

Da in der Regel der Vorgang des Kommissionierens (zweite Stufe) zeitaufwändiger ist als der Vorgang des Befüllens des Regals (erste Stufe), können auf beiden Seiten des Regals unterschiedlich große Abschnitte definiert werden. So ist es zum Beispiel möglich, dass ein Putter, der das Regal (von hinten) befüllt, zwei Kommissionierzonen, in denen jeweils ein Kommissionierbahnhof sein kann, bedient. Die Picker, die in der Kommissionierzone die Artikel aus dem Lagerregal entnehmen, um sie beispielsweise in einen Auftragsbehälter zu geben, müssen aufgrund des vorgegebenen Kommissionierauftrags zu ganz bestimmten Regalfächern laufen und können deshalb nicht wie der Putter in beliebige Regalfächer greifen, so dass längere Wege und längere Bearbeitungszeiten beim Kommissionieren anfallen können.

Die Zuordnungen und Wahl der Größe der Aktionsbereiche von Picker und Putter sind somit frei wählbar. Dies ist insbesondere von Vorteil, wenn ein Picker oder ein Putter eine Pause einlegt bzw. einlegen muss. In diesem Fall können die Abschnitte kurzfristig und kurzzeitig geändert werden, so dass zum Beispiel ein Putter zusätzliche Picker bedient, oder umgekehrt.

Ferner ist es bevorzugt, wenn zusätzlich ein übergeordnetes Lagerverwaltungssystem vorgesehen ist, das eine Befüllung und Leerung der Regalfächer zur Abarbeitung von Kommissionieraufträgen mittels der Bedieneinheiten steuert.

Gemäß einer bevorzugten Ausführungsform des erfindungsgemäßen Verfahrens ist beim Schritt des Befüllens ein Regalfach frei auswählbar, wobei beim Registrieren eine Information darüber, welcher Artikel in welches Regalfach gefüllt wurde, an ein übergeordnetes Lagerverwaltungssystem gesendet wird. Der Artikeltyp ergibt sich aus dem aus dem Artikellager ausgelagerten Artikeltyp. Diese Information ist bekannt. Ort und Anzahl ergibt sich aus dem Vorgang des Befüllens durch den Picker.

Das Lagerverwaltungssystem verarbeitet die Information und steuert nachfolgend die Anzeige der Regalfächer auf der Entnahmeseite, um die zwischengelagerten Artikel entsprechend den gerade zur Arbeitung anstehenden Kommissionieraufträgen entnehmen zu können.

Außerdem ist es von Vorteil, wenn freie, zu befüllende Regalfächer mittels einer Anzeige einer zugeordneten Bedieneinheit angezeigt werden.

Auf diese Weise ist es für einen Picker einfach, ein leeres Regalfach schnell und zuverlässig zu finden.

Gemäß einer bevorzugten Ausführungsform zeigt die Anzeige die Anzahl der in das zugeordnete Regalfach abzugebenden Artikel an.

Auf diese Weise ist ausgeschlossen, dass der Putter eine falsche Anzahl von Artikeln in ein Regalfach legt. Vorzugsweise leuchten die Anzeigen von allen leeren Regalfächern mit der zu befüllenden Anzahl auf. Der Putter findet so leere Regalfächer schnell und einfach, wobei gleichzeitig gewährleistet ist, dass die richtige Anzahl von Artikeln in ein leeres Regalfach abgegeben wird.

Gemäß einer weiteren besonderen Ausführungsform werden die Artikel in einem Ladehilfsmittel aus einem Artikellager ausgelagert und zur Befüllseite verbracht.

Ferner ist es bevorzugt, wenn alle in einem ausgelagerten Ladehilfsmittel befindlichen Artikel in das Lagerregal zwischengelagert werden.

Auf diese Weise kann das Ladehilfsmittel vollständig geleert werden und muss nicht mehr in das Artikellager zurücktransportiert werden. Dadurch reduziert sich die Anzahl der Lagerspiele.

Insbesondere kann der Kommissionierauftrag ein negativer Kommissionierauftrag sein.

Bei einem "negativen" Kommissionierauftrag werden Artikel über die Fördertechnik zu der Entnahmeseite des Lagerregals verbracht, wo der Picker die Artikel in das Regal zurücklegt. Der Putter kann von der Befüllseite den Artikel wiederum entnehmen und ihn in das Artikellager zurückbringen, so dass sich die Artikelflussrichtung umkehrt, d.h. negativ wird.

Diese Vorgehensweise kann in Zeiten eines geringen Kommissionieraufkommens angewendet werden. Während an einigen Arbeitsplätzen auf herkömmliche Weise kommissioniert wird, das heißt Artikel das Artikellager verlassen, kann das Artikellager an anderen Arbeitsplätzen (gleichzeitig) befüllt werden, indem der Artikelfluss umgekehrt wird. Somit ist gewährleistet, dass alle Arbeitsplätze jederzeit ausgelastet sind.

Gemäß einer weiteren besonderen Ausgestaltung werden Retourartikel über die Entnahmeseite in das Lagerregal gefüllt, um anschließend zur Abarbeitung eines neuen Kommissionierauftrags zur Verfügung zu stehen.

Retourartikel müssen somit nicht erneut in das Artikellager eingelagert werden, um anschließend zur erneuten Kommissionierung bereitgestellt zu werden, sondern können direkt in das Zwischenregal eingelagert werden, um sofort wieder kommissioniert zu werden. Dadurch reduziert sich der mit Retourartikeln doch recht erhebliche Aufwand. Retourartikel verlassen die Kommissionieranlage somit wieder umgehend. Das Handling vereinfacht sich drastisch. Der Arbeitsaufwand, der mit Retouren verbunden ist, verringert sich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische perspektivische Ansicht einer Kommissionieranlage gemäß der vorliegenden Erfindung, die erfindungsgemäße Lagerregale umfasst;
- Figur 2: eine schematische perspektivische Ansicht eines Lagerregals gemäß der Erfindung;
- Figur 3: eine schematische Seitenansicht eines erfindungsgemäßen Lagerregals;
- Figur 4: eine Draufsicht auf die Kommissionieranlage der Figur 1; und
- Figur 5: ein Flussdiagramm zur Erläuterung des Verfahrens gemäß der vorlie- genden Erfindung.

In den nachfolgenden Figuren werden gleiche Elemente mit den gleichen Bezugsziffern bezeichnet werden. Das erfindungsgemäße Lagerregal wird allgemein mit 30 bezeichnet werden. Die Kommissionieranlage gemäß der Erfindung wird allgemein mit dem Bezugszeichen 100 bezeichnet werden.

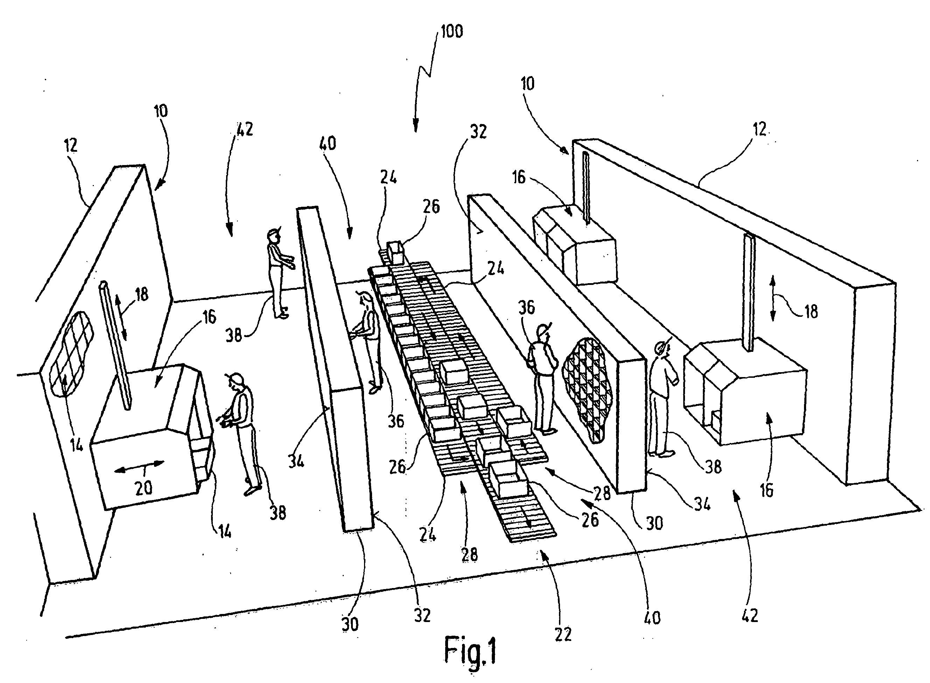

Bezug nehmend auf Figur 1 ist eine perspektivische schematische Ansicht einer Kommissionieranlage 100 gemäß der vorliegenden Erfindung gezeigt.

Die Kommissionieranlage 100 gemäß der vorliegenden Erfindung umfasst ein oder mehrere Artikellager 10, die wiederum Regale, vorzugsweise Behälterregale, 12 aufweisen. Die Regale 12 sind in der Figur 1 lediglich schematisch angedeutet. Lagerregale 14 sind exemplarisch in dem in der Figur 1 links dargestellten Regal 12 teilweise dargestellt.

Entlang von Längsseiten der Regale 12 sind exemplarisch Vertikallifte 16 in beliebiger Anzahl angeordnet und sind in Vertikalrichtung 18 beweglich, um verschiedene Ebenen der Regale 12 erreichen zu können. Die Lifte 16 weisen insbesondere Lastaufnahmemittel (nicht dargestellt) auf, mittels denen Lagerbehälter oder andere Ladehilfsmittel, wie zum Beispiel Tablare, in horizontaler Richtung zwischen den Regalen 12 und den Liften 16 bewegt, und somit ausgetauscht, werden können. Der Lift 16 holt somit Lagerbehälter 14 aus dem Artikellager 10 ab und stellt sie zur weiteren Verarbeitung vorzugsweise an seinem unteren Ende bereit.

In der Figur 1 sind zwei Artikellager 10 gezeigt, die einander zugewandt sind und die mittig zwischen sich eine Fördertechnik 22 angeordnet haben. Die Fördertechnik 22 ist hier in Form einer Rollenbahn 24 implementiert. Die zentrale Fördertechnik 22 könnte jedoch von jedem anderen beliebigen Typ sein, wie zum Beispiel ein Gurtförderer.

Über die zentrale Fördertechnik 22 werden insbesondere Auftragsbehälter 26 zu Kommissionierbahnhöfen 28 transportiert. Genauso ist eine direkte Kommssionierung auf ein Band mit anschließender Übergabe an einen Behälter möglich. Transportrichtungen sind auf der Fördertechnik durch dunkle Pfeile angedeutet. Im Beispiel der Figur 1 werden die Behälter 26, in die später Artikel kommissioniert werden, aus dem hinteren Figurenbereich in den vorderen Figurenbereich transportiert. Seitlich zu der zentralen Fördertechnik 22 ist jeweils eine weitere Rollenbahn 24 angeordnet, wobei die beiden seitlichen Rollenbahnen vorzugsweise in entgegengesetzten Richtungen betrieben werden. Auftragsbehälter 26 werden durch Ausschleusvorrichtungen (nicht dargestellt) in die Kommissionierbahnhöfe 26 ausgeschleust und somit für eine Kommissionierung bereitgestellt. Dadurch, dass die Kommissionierbahnhöfe 28 in entgegengesetzten Richtungen betrieben werden, ist es möglich, dass Auftragsbehälter in einem Kommissionierbahnhof teilweise vorkommissioniert und anschließend in dem gegenüberliegenden Kommissionierbahnhof abschließend bearbeitet werden. Auch ein paralleles Kommissionieren ist möglich.

Den Kommissionierbahnhöfen 28 liegt jeweils ein Lagerregal 30 gegenüber, welches gemäß der vorliegenden Erfindung ausgebildet ist, wie es nachfolgend noch detailliert erläutert werden wird. Die Lagerregale 30 sind zwischen den Artikellagern 10 und der zentralen Fördertechnik 22 sowie den Kommissionierbahnhöfen 28 angeordnet. Die Längsachsen der Regale 30 erstrecken sich vorzugsweise parallel zu den Längsachsen der Regale 12 des Artikellagers 10 und der zentralen Fördertechnik 22.

Die Lagerregale 30 weisen jeweils eine Entnahmeseite 32 und eine Befüllseite 34 auf. Die Entnahmeseite 32 ist hier der zentralen Fördertechnik 22 zugewandt. Die Befüllseite 34 ist hier dem Artikellager 10 zugewandt.

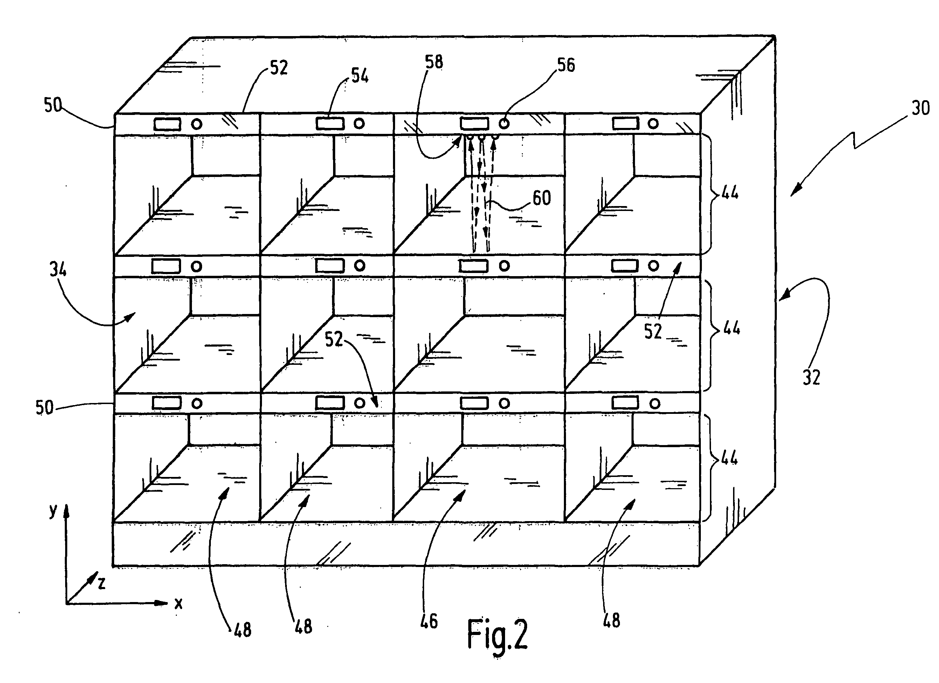

Jedes Lagerregal 30 weist vorzugsweise eine Vielzahl von Lagerfächern auf, wie es in Zusammenhang mit Figur 2 noch detaillierter erläutert werden wird.

Im Beispiel der Figur 1 wird die Kommissionieranlage 100 manuell betrieben. In Bereichen zwischen dem Artikellager 10 und dem Lagerregal 30 sowie zwischen dem Lagerregal 30 und der zentralen Fördertechnik 22 arbeiten Bedienpersonen. Personen, die im Bereich zwischen dem Regallager 30 und der zentralen Fördertechnik 22 arbeiten, werden nachfolgend als "Putter" 36 bezeichnet. Die Putter 36 entnehmen Artikel aus dem Lagerregal 30 und geben ("to put") diese an Auftragsbehälter 26 ab, die sich in zugehörigen Kommissionierbahnhöfen 28 vorzugsweise an vorbestimmten Stellen befinden. Bedienpersonen, die zwischen einem Lagerregal 30 und einem zugeordneten Artikellager 10 arbeiten, werden nachfolgend auch "Picker" 38 genannt. Die Picker 38 nehmen Artikel (hier nicht dargestellt), vorzugsweise in Lagerbehältern 14, aus den Liften 16 und verteilen diese Artikel dann von die Befüllseite 34 her in das Lagerregal 30.

Der Bereich zwischen Lagerregal 30 und zentraler Fördertechnik 22, wo ein Putter 36 arbeitet, wird nachfolgend auch Put-Bereich 40 genannt. Der Bereich zwischen Artikellager 10 und Lagerregal 30, wo die Picker 38 arbeiten, wird nachfolgend auch Pick-Bereich 42 genannt.

Der Artikelfluss in der Kommissionieranlage 100 der Figur 1 stellt sich in der Regel wie folgt dar:
Artikel (nicht explizit in Figur 1 dargestellt) werden aus dem Artikellager 10 vorzugsweise in Lagerbehältern 14 ausgelagert. Die Auslagerung erfolgt insbesondere artikelorientiert (erste Stufe). Dazu sind die Artikelbehälter 14 insbesondere sortenrein mit Artikeln befüllt. Die Auslagerung aus dem Regal 12 erfolgt mittels des Vertikallifts 16, indem dieser unter Verwendung seines in Horizontalrichtung 20 betätigbaren Lastaufnahmemittels (nicht dargestellt) die Lagerbehälter 14 aus dem Regal 12 übernimmt. Da die Vertikallifte in der Regel lediglich in vertikaler Richtung 18 verfahrbar sind, können auf der dem Lift 16 gegenüberliegenden Seite des Regals 12 Lagermaschinen vorgesehen sein, die im Wesentlichen den Transport der Lagerbehälter zwischen Lagerplätzen in Längsrichtung besorgen. Diese Lagermaschinen sind in Figur 1 nicht dargestellt.

Nachdem der Lift 16 einen gewünschten Lagerbehälter 14 aufgenommen hat, wird er vorzugsweise in seinen Fußbereich verfahren, so dass ein Picker 38 den Auftragsbehälter 14 entnehmen kann. Der Picker 38 leert den Auftragsbehälter 14 vorzugsweise vollständig, indem er die Artikel, die in dem Lagerbehälter 14 enthalten sind, von der Befüllseite 34 in das Lagerregal 30 gibt.

Im Put-Bereich 40 kann dann ein Putter 36 die Artikel entnehmen und diese in einen vorbestimmten Auftragsbehälter 26 geben, um einen Kommissionierauftrag abzuarbeiten (zweite Stufe).

Bezug nehmend auf Figur 2 ist ein Lagerregal 30 gemäß der vorliegenden Erfindung in perspektivischer Ansicht näher dargestellt.

Das Lagerregal 30 weist insbesondere mehrere Regalebenen 44 auf, die in mehrere nebeneinander liegende Regalfächer unterteilt sind. In der Figur 2 sind zwei verschieden große Regalfächer dargestellt, ein kleines Regalfach 48 und ein größeres Regalfach 46. Eine zweite Spalte von rechts besteht aus großen Regalfächern 46. Die restlichen Regalfächer sind kleine Regalfächer 48.

Oberhalb und/oder unterhalb jeder Regalebene 44 kann eine Leiste 50 zur Aufnahme von Bedieneinheiten 52 angeordnet werden. Eine Bedieneinheit 52 umfasst eine Anzeige 54 und optional eine Quittiertaste 56. Die Bedieneinheit 52 umfasst ferner ein Sender-Empfänger-Paar 58 zur Ausbildung eines Strahlenfelds 60, welches vorzugsweise in einer Ebene liegt, in der auch eine Öffnung des Regalfachs liegt. In der Figur 2 ist lediglich ein einziges Sender-Empfänger-Paar 58 dargestellt. Es versteht sich jedoch, dass jedes Regalfach der Figur 2 mit einem oder mehreren Sender-Empfänger-Paaren 58 ausgerüstet sein kann, um jede Öffnung, insbesondere vollständig, mit einem Strahlenfeld 60 abzudecken.

In Figur 2 blickt man auf die Befüllseite 34 des Lagerregals 30. Es versteht sich, dass die Entnahmeseite 32 genauso aufgebaut und angeordnet sein kann, wie die Befüllseite 34. Ferner ist es klar, dass ein Bedienelement 50 einem oder mehreren, vorzugsweise nebeneinander liegenden Regalfächern 46, 48 zugeordnet sein kann. Es wird jedoch besonders bevorzugt, wenn jedem Regalfach 46, 48 eine eigene Bedieneinheit 50 zugeordnet ist. Insbesondere auf der Befüllseite 34 ist es von Vorteil, wenn jedem Regalfach 46, 48 ein eigenes Strahlfeld 60 zugeordnet ist, um die Befüllung mit Artikeln zu erfassen und an ein übergeordnetes Lagerverwaltungssystem weiterleiten zu können. Wenn eine einzige Bedieneinheit 52 mehreren Regalfächern gleichzeitig zugeordnet ist, so sind vorzugsweise auch mehrere Sender-Empfänger-Paare 58 vorgesehen, so dass erfasst werden kann, auf welches der zugeordneten Regalfächer tatsächlich zugegriffen wird.

Die Anzeigen 54 können ferner benutzt werden, um leere Regalfächer 46, 48 anzuzeigen. Insbesondere wird die Anzahl der gerade in das Lagerregal 30 zu gebenden Artikel mittels den Anzeigen 54 angezeigt. Die Anzeige 54 kann in Form eines LED-Felds oder einer einzelnen Leuchte implementiert sein. Wenn die Anzeige 54 eine einzelne Leuchte ist, kann beispielsweise am Lift 16 (vgl. Figur 1) eine weitere Anzeige (nicht dargestellt) vorgesehen sein, die die Anzahl der Artikel des Lagerbehälters, der gerade vom Lift 16 präsentiert wird, zeigt, die in das Lagerregal 30 zu laden sind. Die Anzeige 54 kann dann auch vollständig weggelassen werden, da der Putter 38 in der Regel alleine erkennt, welches der Regalfächer 46, 48 leer ist. Sollte anstatt eines Menschen eine Lagermaschine zum Befüllen des Lagerregals 30 verwendet werden, so könnte die Lagermaschine mit Mitteln versehen sein, um festzustellen, ob ein Regalfach 46, 48 leer ist oder nicht.

Auch die Quittiertaste 56 stellt lediglich ein optionales Merkmal der Bedieneinheiten 52 dar. Die Quittiertaste 56 kann benutzt werden, um dem übergeordneten Lagerverwaltungssystem anzuzeigen, dass ein Befüllvorgang abgeschlossen ist. Zwar wäre diese Mitteilung auch mittels der Sender-Empfänger-Paare 58 zu bewerkstelligen, jedoch stellt die Quittiertaste 56 eine weitere Sicherheitsstufe dar. Die Quittiertaste 56 kann jedoch auch weggelassen werden.

Ferner versteht es sich, dass das Strahlenfeld 60 beliebig zu den Öffnungen der Regalfächer 46, 48 orientiert sein kann. In Figur 2 ist eine vertikale Ausrichtung dargestellt. Die Ausrichtung könnte jedoch auch horizontal oder unter einem beliebigen Winkel erfolgen. Auch muss das Strahlenfeld 60 nicht bündig mit den Rändern der Öffnungen der jeweiligen Regalfächer 46, 48 abschließen. Das Strahlenfeld 60 kann gegenüber einer vertikalen Ebene geneigt sein (z.B. in Richtung des Inneren eines Regalfachs 46, 48).

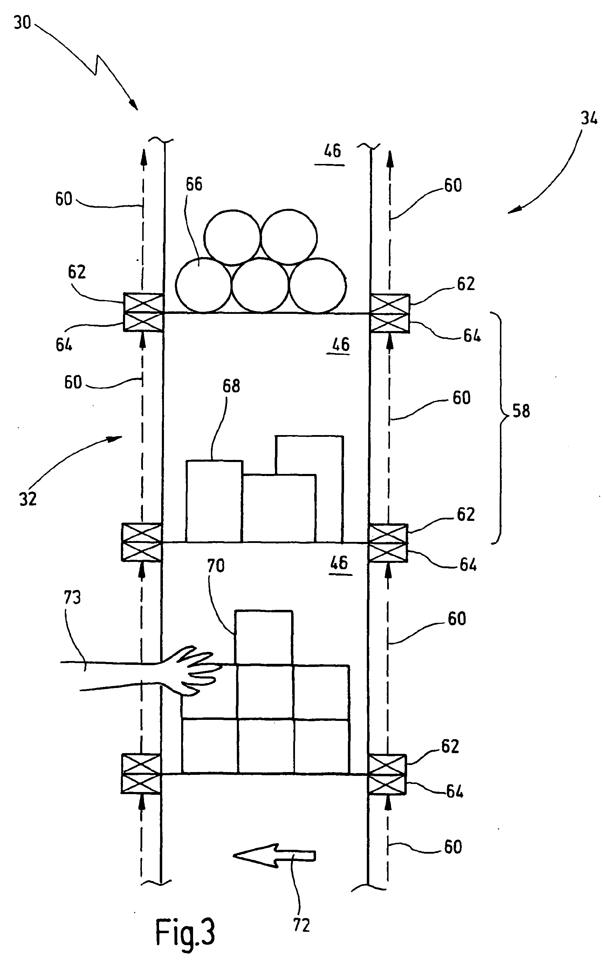

Bezug nehmend auf Figur 3 ist eine schematische Seitenansicht eines Teils des Lagerregals 30 der Figur 2 gezeigt, das abgesehen von dem Sender-Empfänger-Paar 58 unverändert ist.

Das Sender-Empfänger-Paar 58 der Figur 3 besteht hier aus räumlich getrennten Sendern 62, denen jeweils ein oder mehrere Empfänger 64 gegenüberliegend zugeordnet sind. Im Beispiel der Figur 3 strahlen die Sender 62 aus einer an einem unteren Rand einer Öffnung befindlichen Leiste in Richtung der Empfänger 64, die in einer an einem oberen Rand der Öffnung befindlichen Leiste angeordnet sind.

In der Figur 3 sind drei Regalfächer 46 bereits mit unterschiedlichen Artikeln 66, 68 und 70 beladen. Die Beladung der Regalfächer 46 erfolgt vorzugsweise sortenrein. Die Artikel 66 bis 70 stellen jeweils unterschiedliche Artikeltypen dar.

In der rechten Hälfte der Figur 3 ist die Befüllseite 34 des Lagerregals 30 gezeigt. In der linken Hälfte der Figur 3 ist die Entnahmeseite des Lagerregals 30 gezeigt. Man erkennt hier recht deutlich, dass auf beiden Seiten 32 und 34 Strahlfelder 60 vorgesehen sind, um Zugriffe von beiden Seiten auf die Regalfächer 46 überwachen zu können.

Bei einer normalen Abarbeitung von Kommissionieraufträgen erfolgt ein Materialfluss in Richtung eines hell dargestellten Pfeils 72, das heißt von der Befüllseite 34 in Richtung der Entnahmeseite 32, wie es exemplarisch auch durch eine Hand 73 angedeutet ist, die einem der Picker 36 (vgl. Figur 1) gehören kann.

In Figur 3 greift die Hand 73 in das unterste befüllte Regalfach 46, um einen oder mehrere Artikel 70 zu entnehmen. Sobald die Hand 73 das Strahlfeld 60 durchquert, wird ein entsprechendes Signal an das übergeordnete Lagerverwaltungssystem gesendet, welches diesen Vorgang registriert.

Mittels auf der Entnahmeseite 32 vorgesehenen Anzeigen (in Figur 3 nicht dargestellt) kann auch die Anzahl der zu entnehmenden Artikel angezeigt werden, so dass der Picker per Licht zum richtigen Regalfach 46 geführt wird, um einen Kommissionierauftrag abzuarbeiten. Diese Art des Kommissionierens wird auch als "Pick-by-Light" bezeichnet.

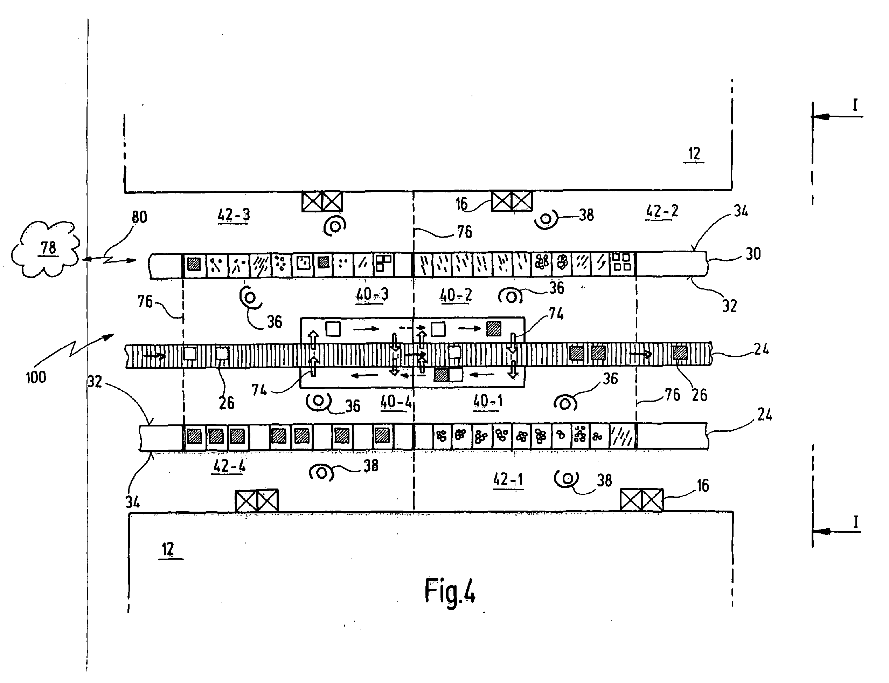

Bezug nehmend auf Figur 4 ist eine schematische Draufsicht auf die in Figur 1 dargestellte Kommissionieranlage 100 gezeigt.

Man erkennt in Figur 4 die mittig verlaufende zentrale Rollenbahn 24, an die sich seitlich vier Arbeitsplätze bzw. Pick-Bereiche 40-1, 40-2, 40-3 und 40-4 anschließen. Die Pick-Bereiche 40 werden hier jeweils von einem Picker 36 bedient und sind durch gestrichelte Hilfslinien 76 abgegrenzt. Jeder Put-Bereich verfügt über einen Kommissionierbahnhof, die hier in Form von Gurtförderern implementiert sind. Um einen Auftragsbehälter 24 in einen Kommissionierbahnhof auszuschleusen oder um ihn aus einem Kommissionierbahnhof auf die zentrale Fördertechnik 24 auszuschleusen, sind Ausschleusvorrichtungen 74 vorgesehen, die in Figur 4 mit hellen Pfeilen angedeutet sind. Helle Auftragsbehälter 26 stellen leere Auftragsbehälter dar. Dunkel schattierte Auftragsbehälter 26 stellen fertig abgearbeitete Auftragsbehälter dar.

Ferner ist in Figur 4 zu erkennen, dass die Lagerregale 30 in mehrere Abschnitte unterteilt sind, was durch fettgedruckte Linien verdeutlicht ist. In Figur 4 sind vier Lagerregale zu erkennen. Jedes Lagerregal ist hier eindeutig einem der Put-Bereiche 40 zugeordnet. Die Lagerregale sind teilweise mit losen Artikeln gefüllt, was durch Punkte und Striche angedeutet ist. Sie können jedoch auch mit Behältern gefüllt werden, was durch Quadrate angedeutet ist.

Der Nachschub erfolgt über die Pick-Bereiche 42-1, 42-2, 42-3 und 42-4. Die Pick-Bereiche 42 können größer als die Put-Bereiche 40 sein, insbesondere was die Längsausbreitung betrifft. Ein Picker 38 kann auch mehrere Lagerregale 30 bzw. mehrere Put-Bereiche 40 "von hinten" mit Artikeln versorgen. Die Artikel werden hier über die Vertikallifte 16 bereitgestellt. Anstatt der Vertikallifte 16 könnte jedoch auch eine Fördertechnik oder Ähnliches eingesetzt werden, um die Artikel aus dem Artikellager 10 in den Pick-Bereich 42 zu liefern.

Es versteht sich, dass der Arbeitsfluss auch umgekehrt werden kann.

Zu Zeiten einer geringen Auslastung kann unter Verwendung des Lagerregals 30 nicht nur kommissioniert, sondern auch eingelagert werden. Dieser Vorgang kann simultan zum Kommissionieren oder getrennt vom Kommissionieren erfolgen.

Beim Einlagern werden volle "Auftragsbehälter 26", die hier als Lagerbehälter fungieren, über die zentrale Fördertechnik 22 in die Put-Bereiche 40 verbracht. Die Putter 36 entnehmen die Artikel und geben sie in die Lagerregale 30, wobei sie ebenfalls, wie zuvor die Picker 38, freie Regalfächer beliebig auswählen können, um sie zu befüllen. Die Picker 38 können die in den Regalen 30 befindlichen Artikel dann entnehmen und sie über die Lifte 16 in das Regal 12 zurücklagern. Die Artikel können aber auch einfach im Regal 30 verbleiben.

Auf diese Weise kann ein "negativer" Kommissionierauftrag abgearbeitet werden.

Dieser Betrieb ist insbesondere für Retourenartikel interessant.

Üblicherweise werden Retourenartikel über den normalen Wareneingang in das Artikellager 10 (vgl. Figur 1) verbracht. Retourenartikel erfordern ein besonderes Handling, da zum Beispiel festgestellt werden muss, ob der Artikel überhaupt von seiner Haltbarkeit her noch zurückgelagert werden kann. In der Regel werden viele verschiedene Artikeltypen in jeweils geringer Anzahl als Retourenwaren angeliefert, so dass viel Platz im Artikellager verschenkt wird, wenn man jeweils einen Retourenartikel zum Beispiel in einen Lagerbehälter gibt, der üblicherweise viele Artikel dieses Retourenartikeltyps aufnehmen kann.

Erfindungsgemäß werden die Retourenartikel über die zentrale Fördertechnik in den normalerweise zur Kommissionierung verwendeten Bereich 40 verbracht. Der Putter 36 entnimmt den Retourenartikel und gibt ihn in ein freies Regalfach. Dies wird von dem übergeordneten Lagerverwaltungssystem 78, welches mittels Verbindungen 80 (hier drahtlos dargestellt) mit den Bedieneinheiten verbunden ist, registriert. Das Lagerverwaltungssystem 78 versucht dann vorzugsweise, die Retourenartikel bevorzugt bei einer Abarbeitung von nachfolgenden Kommissionieraufträgen wieder zu verbrauchen, so dass erst gar keine Rücklagerung in das Artikellager 10 stattfindet. Diese Vorgehensweise hat sich als äußerst effizient herausgestellt, insbesondere da weniger Lagerspiele erforderlich sind und weniger Platz für Retourenartikel benötigt wird. Außerdem werden Retourenartikel schnell "verbraucht", was insbesondere bei kurzer Haltbarkeit von Interesse ist.

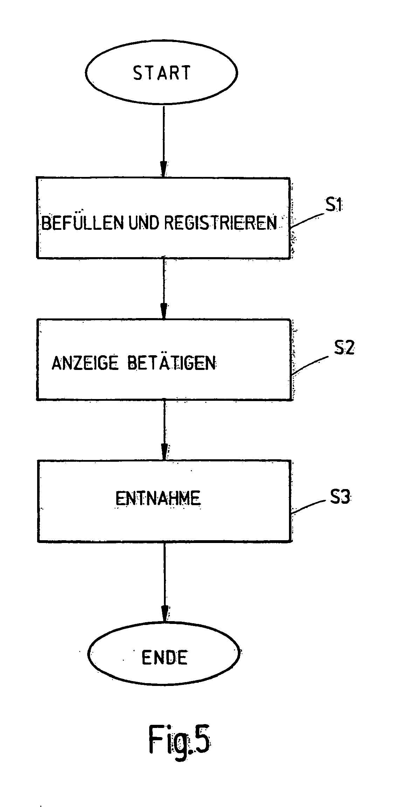

In Figur 5 ist das erfindungsgemäße Verfahren in Form eines Flussdiagramms dargestellt. In einem ersten Schritt S1 werden mehrere Regalfächer mit einem oder mehreren Artikeln eines oder mehrerer Artikeltypen von einer Befüllseite des Lagerregals aus befüllt, wobei das Befüllen mittels der Bedieneinheit registriert wird.

In einem Schritt S2 werden die zur Abarbeitung benötigten Artikel aus dem befüllten Regalfach entnommen, wobei das Regalfach zuvor der betätigten Anzeige zugeordnet wurde.

In einem Schritt S3 werden die Artikel von der Entnahmeseite her entnommen.

## Patentansprüche

1. Lagerregal (30) zur Verwendung in einer Kommissionieranlage (100), mit einer Vielzahl von übereinander angeordneten Regalebenen (44), die jeweils eine Vielzahl von nebeneinander angeordneten Regalfächern (46, 48) umfassen, mit einer Befüllseite (34) und einer von der Befüllseite (34) verschiedenen Entnahmeseite (32), die der Befüllseite (34) vorzugsweise gegenüberliegt, wobei die Regalfächer (46, 48) von der Befüllseite (34) her mit Artikeln (66-70) befüllt werden, die wiederum von der Entnahmeseite (32) her zu Kommissionierzwecken entnommen werden, und einer Vielzahl von Bedieneinheiten (52), die jeweils zumindest ein Anzeigeelement (54), einen Sender (62) und einen Empfänger (64) aufweisen und derart zumindest auf der Befüllseite (34) angeordnet sind, dass jedem Regalfach (46, 48) eine Bedieneinheit (52) zugeordnet ist, **dadurch gekennzeichnet, dass** jedem Regalfach auf der Entnahmeseite (34) zusätzlich zumindest eine Anzeige (54) und vorzugsweise auch ein Sender (62) und ein Empfänger (64) zugeordnet ist.

2. Lagerregal (30) nach Anspruch 1, wobei jedem Regalfach (46, 48) jeweils eine eigene Bedieneinheit (52) zugeordnet ist.

3. Lagerregal (30) nach einem der Ansprüche 1 oder 2, wobei die Bedieneinheit (52) ferner ein Eingabeelement aufweist, um eine Anzahl von aus einem Regalfach (46, 48) entnommenen Artikeln (66-70) oder eine Anzahl von an ein Regalfach (46, 48) abgegebenen Artikeln (66-70) eingeben zu können.

4. Lagerregal (30) nach einem der Ansprüche 1 bis 3, wobei die Bedieneinheit (52) in Form einer Leiste realisiert ist, die oberhalb und/oder unterhalb einer Regalebene (44) angeordnet ist.

5. Lagerregal (30) nach einem der Ansprüche 1 bis 4, wobei der Sender (62) ein Strahlfeld definiert, um eine Öffnung eines Regalfachs (46, 48) abzudecken, und wobei der Empfänger (64) angepasst ist, reflektierte Strahlen des Senders (62) zu empfangen, wenn die Öffnung von einem Gegenstand, vorzugsweise einer Hand einer Bedienperson (36, 38), durchquert wird.

6. Lagerregal (30) nach einem der Ansprüche 1 bis 5, wobei das Anzeigeelement (54) ein LED-Anzeigenfeld oder eine einzelne Leuchtdiode ist.

7. Lagerregal (30) nach einem der Ansprüche 1 bis 6, wobei die Bedieneinheit (52) ferner eine Quittiertaste (56) umfasst.

8. Kommissionieranlage (100) mit einem Artikellager (10), einem Lagerregal (30) nach einem der vorhergehenden Ansprüche und einer Fördertechnik (22), wobei das Lagerregal (30) zwischen dem Artikellager (10) und der Fördertechnik (22) angeordnet ist.

9. Kommissionieranlage (100) nach Anspruch 8, wobei zu kommissionierende Artikel (66-70) über die Fördertechnik (22) abtransportierbar sind, wobei die Fördertechnik (22) vorzugsweise einen oder mehrere Kommissionierbahnhöfe (28) umfasst, die auf der Entnahmeseite (32) jeweils einem vorbestimmten Abschnitt (40) des Lagerregals (30) zugeordnet sind, der von einem Putter (36) bedienbar ist, und wobei das Lagerregal (30) auf der Befüllseite (34) in eine Vielzahl weiterer Abschnitte (42) unterteilt ist, die einem oder mehreren Abschnitten (40) auf der Entnahmeseite (32) zugeordnet sind und die von einem Picker (38) bedienbar sind.

10. Kommissionieranlage (100) nach einem der Ansprüche 8 oder 9, wobei ferner ein übergeordnetes Lagerverwaltungssystem (78) vorgesehen ist, der eine Befüllung und Leerung der Regalfächer (46, 48) zur Abarbeitung von Kommissionieraufträgen mittels der Bedieneinheiten (52) steuert.

11. Verfahren zum Kommissionieren von Artikeln (66-70), wobei Artikel (66-70) gemäß einem Kommissionierauftrag manuell kommissioniert werden, wobei ein Lagerregal (30) eingesetzt wird, welches eine Vielzahl von Regalfächern (46, 48) aufweist, wobei jedem Regalfach (46, 48) eine Bedieneinheit (50), die einen Sender (62), einen Empfänger (64) und eine Anzeige (54) aufweist, zugeordnet ist, das die folgenden Schritte aufweist:
Befüllen eines oder mehrerer Regalfächer (46, 48) mit einem oder mehreren Artikeln (66-70) eines oder mehrerer Artikeltypen von einer Befüllseite (34) des Lagerregals (30) her, wobei das Befüllen mittels der Bedieneinheit (52) registriert wird;
Betätigen einer Anzeige (54) eines Regalfachs (46, 48), welches zuvor befüllt wurde und in welchem Artikel (66-70) lagern, die zur Abarbeitung des Kommissionierauftrags benötigt werden; und
Entnahme der zur Abarbeitung benötigten Artikel (66-70) aus dem befüllten Regalfach (46, 48), welches der betätigten Anzeige (54) zugeordnet ist.

12. Verfahren nach Anspruch 11, wobei beim Befüllen ein Regalfach (46, 48) frei ausgewählt wird, und wobei beim Registrieren eine Information darüber, welcher Artikel (66-70) in welches Regalfach (46, 48) gefüllt wurde, an ein übergeordnetes Lagerverwaltungssystem (78) gesendet wird.

13. Verfahren nach Anspruch 11 oder 12, wobei das zu befüllende Regalfach (46, 48) mittels einer Anzeige (54) einer zugeordneten Bedieneinheit (52) angezeigt wird, wobei die Anzeige (54) vorzugsweise die Anzahl der in das zugeordnete Regalfach (46, 48) abzugebenden Artikel (66-70) anzeigt.

14. Verfahren nach einem der Ansprüche 11 bis 13, wobei der Kommissionierauftrag ein negativer Kommissionierauftrag ist, so dass Artikel (66-70) zur Rücklagerung oder Einlagerung in ein Artikellager (10) über die Entnahmeseite (32) in das Lagerregal (30) gefüllt und über die Befüllseite (34) entnommen werden, um in das Artikellager (10) verbracht zu werden.

15. Verfahren nach einem der Ansprüche 11 bis 13, wobei Retourenartikel über die Entnahmeseite (32) in das Lagerregal (30) gefüllt werden, um anschließend zur Abarbeitung eines neuen Kommissionierauftrags zur Verfügung zu stehen.

## Claims

1. A storage rack (30) for usage in an order-picking system (100) comprising:
a plurality of rack planes (44) being arranged on top of each other and respectively comprising a plurality of rack compartments (46, 48) being arranged side-by-side; a filling side (34); and a removal side (32), which is different to the filling side (34), wherein the removal side preferably is arranged oppositely, wherein the rack compartments (46, 48) are filled with articles (66-70) at the filling side (34), wherein the articles are removed at the removal side (32) for order-picking purposes; and a plurality of serving units (52), each of which comprises at least a display element (54), a transmitter (62) and a receiver (64) and is at least arranged such at the filling side (34) that each of the rack compartments (46, 48) is assigned to one serving unit (52), **characterized in that** each of the rack compartments at the removal side (34) is assigned additionally to at least one display (54), and preferably to a transmitter (62) and a receiver (64) as well.

2. The storage rack (30) of claim 1, wherein each of the rack compartments (46, 48) is respectively assigned to its own serving unit (52).

3. The storage rack (30) of claim 1 or 2, wherein the serving unit (52) further comprises an entry element for entering a number of articles (66-70) removed from one of the rack compartments (46, 48) or a number of articles (66-70) delivered to one of the rack compartments (46, 48).

4. The storage rack (30) of any of the claims 1 to 3, wherein the serving unit (52) is realized as a strip, which is arranged above and/or beneath a rack plane (44).

5. The storage rack (30) of any of the claims 1 to 4, wherein the transmitter (62) defines a field of beams for covering an opening of one of the rack compartments (46, 48), and wherein the receiver (64) is adapted to receive reflected beams from the transmitter (62), if the opening is crossed by an object, preferably by an operator's (36, 38) hand.

6. The storage rack (30) of any of the claims 1 to 5, wherein the display element (54) is an LED-display array, or a single light-emitting diode.

7. The storage rack (30) of any of the claims 1 to 6, wherein the serving unit (52) further comprises an acknowledgment button (56).

8. An order-picking system (100) comprising an article warehouse (10), a storage rack (30) in accordance with any of the preceding claims, and a conveyor (22), wherein the storage rack (30) is arranged between the article warehouse (10) and the conveyor (22).

9. The order-picking system (100) of claim 8, wherein articles (66-70) to be picked are transported away via the conveyor (22), wherein the conveyor (22) preferably comprises one or more order-picking loops (28), which are respectively assigned, at the removal side (32), to a predetermined section (40) of the storage rack (30), which can be operated by a putting person (36), and wherein the storage rack (30) is divided, at the filling side (34), into a plurality of further sections (42) being assigned to the one or more sections (40) at the removal side and which can be operated by a picking person (38).

10. The order-picking system (100) of claim 8 or 9, further comprising a superordinated warehouse management system (78) controlling filling and emptying of the rack compartments (46, 48) in order to process picking orders by means of the serving units (52).

11. A method for order-picking articles (66-70), wherein the articles (66-70) are manually picked in accordance with a picking order, wherein a storage rack (30) is used which comprises a plurality of rack compartments (46, 48), wherein each of the rack compartments (46, 48) is assigned to a serving unit (50) which comprises a transmitter (62), a receiver (64) and a display (54), including the following steps:
filling one ore more of the rack compartments (46, 48) with one or more articles (66-70) of one or more article types at a filling side (34) of the storage rack (30), wherein the filling is registered by means of the serving unit (52);
operating a display (54) of one of the rack compartments (46, 48), which have been filled earlier and in which articles (66-70) required for processing the picking order are stored; and
removing the articles (66-70) required for the processing from the filled rack compartment (46, 48), which is assigned to the operated display (54).

12. The method of claim 11, wherein one of the rack compartments (46, 48) is arbitrarily selected at the filling step, and wherein an information on which of the articles (66-70) has been filled into which of the rack compartments (46, 48) is transmitted to a superordinated warehouse management system (78) at the registration step.

13. The method of claim 11 or 12, wherein the rack compartment (46, 48), which is to be filled, is indicated by means of a display (54) of an assigned serving unit (52), wherein the display (54) preferably indicates the number of articles (66-70) which are to be delivered into the assigned rack compartment (46, 48).

14. The method of any of the claims 11 to 13, wherein the picking order is a negative picking order, so that the articles (66-70) are filled at the removal side (32) into the article warehouse (10) for the purpose of storing back or storing, and are removed at the filling side (34) in order to be transported to the article warehouse (10).

15. The method of any of the claims 11 to 13, wherein return articles are filled in the storage rack (30) at the removal side (32), in order to be subsequently available for processing a new picking order.

## Revendications

1. Rayon de magasin (30) à utiliser dans une installation de commissionnement (100), avec une multiplicité de plans de rayonnage (44) disposés les uns au-dessus des autres, qui comprennent chacun une multiplicité de casiers de rayonnage (46, 48) disposés les uns à côté des autres, avec un côté de remplissage (34) et un côté de prélèvement (32) différent du côté de remplissage (34) et situé de préférence à l'opposé du côté de remplissage (34), dans lequel les casiers de rayonnage (46, 48) sont remplis d'articles (66-70) par le côté de remplissage (34), lesquels sont de nouveau prélevés par le côté de prélèvement (32) pour les besoins de commissionnement, et avec une multiplicité d'unités de commande (52), qui présentent chacune au moins un élément d'affichage (54), un émetteur (62) et un récepteur (64) et qui sont disposées au moins sur le côté de remplissage (34) de telle manière qu'une unité de commande (52) soit associée à chaque casier de rayonnage (46, 48), **caractérisé en ce qu'**au moins un affichage (54) et de préférence aussi un émetteur (62) et un récepteur (64) sont en plus associés à chaque casier de rayonnage sur le côté de prélèvement (32).

2. Rayon de magasin (30) selon la revendication 1, dans lequel une unité de commande propre (52) est respectivement associée à chaque casier de rayonnage (46, 48).

3. Rayon de magasin (30) selon l'une quelconque des revendications 1 ou 2, dans lequel l'unité de commande (52) comprend en outre un élément d'entrée, afin de pouvoir entrer un nombre d'articles (66-70) prélevés d'un casier de rayonnage (46, 48) ou un nombre d'articles (66-70) déposés dans un casier de rayonnage (46, 48).

4. Rayon de magasin (30) selon l'une quelconque des revendications 1 à 3, dans lequel l'unité de commande (52) est réalisée sous la forme d'un bandeau, qui est disposé au-dessus et/ou en dessous d'un plan de rayonnage (44).

5. Rayon de magasin (30) selon l'une quelconque des revendications 1 à 4, dans lequel l'émetteur (62) définit un champ de rayonnement afin de couvrir une ouverture d'un casier de rayonnage (46, 48), et dans lequel le récepteur (64) est apte à recevoir des rayonnements réfléchis de l'émetteur (62), lorsque l'ouverture est traversée par un objet, de préférence une main d'un opérateur (36, 38).

6. Rayon de magasin (30) selon l'une quelconque des revendications 1 à 5, dans lequel l'élément d'affichage (54) est un champ d'affichage à DEL ou une diode électroluminescente unique.

7. Rayon de magasin (30) selon l'une quelconque des revendications 1 à 6, dans lequel l'unité de commande (52) comprend en outre une touche de confirmation (56).

8. Installation de commissionnement (100) avec un magasin d'articles (10), un rayon de magasin (30) selon l'une quelconque des revendications précédentes, et un mécanisme de transport (22), dans laquelle le rayon de magasin (30) est disposé entre le magasin d'articles (10) et le mécanisme de transport (22).

9. Installation de commissionnement (100) selon la revendication 8, dans laquelle des articles à commissionner (66-70) peuvent être évacués par le mécanisme de transport (22), dans laquelle le mécanisme de transport (22) comprend de préférence une ou plusieurs stations de commissionnement (28), qui sont associées respectivement à une partie prédéterminée (40) du rayon de magasin (30) sur le côté de prélèvement (32) qui peut être desservie par un préposé au chargement (36), et dans laquelle le rayon de magasin (30) est divisé sur le côté de prélèvement (34) en une multiplicité d'autres parties (42), qui sont associées à une ou à plusieurs parties (40) sur le côté de prélèvement (32) et qui peuvent être desservies par un préposé au commissionnement (38).

10. Installation de commissionnement (100) selon l'une quelconque des revendications 8 ou 9, dans laquelle il est en outre prévu un système coupole de gestion du magasin (78), qui commande un remplissage et une vidange des casiers de rayonnage (46, 48) afin d'exécuter les ordres de commissionnement au moyen des unités de commande (52).

11. Procédé de commissionnement d'articles (66-70), dans lequel des articles (66-70) sont commissionnés manuellement selon un ordre de commissionnement, dans lequel on utilise un rayon de magasin (30) qui comprend une multiplicité de casiers de rayonnage (46, 48), dans lequel on associe à chaque casier de rayonnage (46, 48) une unité de commande (52) qui comprend un émetteur (62), un récepteur (64) et un affichage (54), qui comprend les opérations suivantes:
- remplissage d'un ou de plusieurs casiers de rayonnage (46, 48) avec un ou plusieurs articles (66-70) d'un ou de plusieurs types d'article par un côté de remplissage (34) du rayon de magasin (30), le remplissage étant enregistré au moyen de l'unité de commande (52) ;
- activation d'un affichage (54) d'un casier de rayonnage (46, 48) qui a été rempli au préalable et dans lequel sont entreposés des articles (66-70), qui sont nécessaires pour l'exécution de l'ordre de commissionnement; et
- prélèvement des articles (66-70) nécessaires pour l'exécution hors du casier de rayonnage (46, 48) qui est associé à l'affichage activé (54).

12. Procédé selon la revendication 11, dans lequel on choisit librement un casier de rayonnage (46, 48) lors du remplissage et dans lequel on envoie à un système coupole de gestion du magasin (78), lors de l'enregistrement, une information précisant l'article (66-70) et le casier de rayonnage (46, 48) dans lequel cet article a été entreposé.

13. Procédé selon la revendication 11 ou 12, dans lequel on affiche le casier de rayonnage à remplir (46, 48) au moyen d'un affichage (54) d'une unité de commande associée (52), dans lequel l'affichage (54) affiche de préférence le nombre des articles (66-70) à déposer dans le casier de rayonnage associé (46, 48).

14. Procédé selon l'une quelconque des revendications 11 à 13, dans lequel l'ordre de commissionnement est un ordre de commissionnement négatif, de telle manière que l'on charge des articles (66-70) dans le rayon de magasin (30) par le côté de prélèvement (32) pour les redéposer ou les déposer dans un magasin d'articles (10) et on les prélève par le côté de remplissage (34), afin de les ramener dans le magasin d'articles (10).

15. Procédé selon l'une quelconque des revendications 11 à 13, dans lequel on dépose des articles en retour dans le rayon de magasin (30) par le côté de prélèvement (32), pour les remettre ensuite à disposition en vue de l'exécution d'un nouvel ordre de commissionnement.
